(19) Europäisches Patentamt
European Patent Office
Office européen des brevets

(11) **EP 4 589 702 A1**

(12) **EUROPEAN PATENT APPLICATION**

(43) Date of publication:
**23.07.2025 Bulletin 2025/30**

(21) Application number: **24222246.1**

(22) Date of filing: **20.12.2024**

(51) International Patent Classification (IPC):
***H01M 10/04*** (2006.01)     ***H01M 10/0587*** (2010.01)

(52) Cooperative Patent Classification (CPC):
**H01M 10/0409; H01M 10/0431; H01M 10/0587;
Y02E 60/10; Y02P 70/50**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.01.2024 CN 202410089687**

(71) Applicant: **Hithium Tech HK Limited
Hong Kong (HK)**

(72) Inventors:
• **TAN, Tao
Xiamen, 361100 (CN)**
• **ZHANG, Jun
Xiamen, 361100 (CN)**

(74) Representative: **RGTH
Patentanwälte PartGmbB
Neuer Wall 10
20354 Hamburg (DE)**

(54) **CONTROL METHOD FOR CYLINDRICAL BATTERY CELL WINDING, DEVICE, ELECTRONIC DEVICE AND STORAGE MEDIUM**

(57)     The present disclosure provides a control method for cylindrical battery core winding, device, apparatus and storage medium. The method includes obtaining (S302) a real-time diameter of a current component, calculating (S304) a real-time offset value according to the real-time diameter of the current component and a preset target diameter, determining (S306) a target pressure value of an embossing mechanism corresponding to the real-time offset value based on a preset corresponding relationship, and adjusting (S308) a diameter of a next component by controlling the embossing mechanism to operate at the target pressure value, and driving an embossing roller of the embossing mechanism to emboss a cathode sheet or an anode sheet in the next component.

```
┌─────────────────────────────────────────────────────┐  ⌒ S302
│ Obtaining a real-time diameter of a current component,│
│ where the current component includes a current winding│
│ core or a current winding layer                        │
└─────────────────────────────────────────────────────┘
                         │
┌─────────────────────────────────────────────────────┐  ⌒ S304
│ Calculating a real-time offset value according to the │
│ real-time diameter of the current component and a     │
│ preset target diameter                                 │
└─────────────────────────────────────────────────────┘
                         │
┌─────────────────────────────────────────────────────┐  ⌒ S306
│ Determining a target pressure value of an embossing   │
│ mechanism corresponding to the real-time offset value │
│ based on a preset corresponding relationship           │
└─────────────────────────────────────────────────────┘
                         │
┌─────────────────────────────────────────────────────┐  ⌒ S308
│ Adjusting a diameter of a next component by controlling│
│ the embossing mechanism to operate at the target      │
│ pressure value, and driving an embossing roller of the│
│ embossing mechanism to emboss a cathode sheet or an   │
│ anode sheet in the next component, where the next     │
│ component includes a next winding core or a next      │
│ winding layer corresponding to the current component  │
└─────────────────────────────────────────────────────┘
```

FIG. 3

**Description**

**TECHNICAL FIELD**

The present disclosure relates to the field of energy storage technology, and in particular to a control method for cylindrical battery cell winding, a device, an electronic device and a storage medium.

**BACKGROUND**

The cylindrical wound battery cell consists of an anode sheet, a cathode sheet and two separators. The diameter of the battery cell mainly depends on the thickness and length of the anode sheet, the cathode sheet and the separators. When the diameter of the battery cell is larger than the rated diameter, it will have an adverse effect on winding core into shell, collector plate welding, battery cycle performance, etc.

In the related art, the diameter of the cylindrical battery cell is detected by the through gauge on the battery cell diameter detection tooling. However, the above method is a post-detection method, which is prone to the occurrence of abnormalities in the diameters of a plurality of consecutive cylindrical battery cells, and has a high failure rate.

**SUMMARY**

The present disclosure provides a control method for cylindrical battery cell winding, a device, an electronic device, and a storage medium to overcome, at least to a certain extent, the problem of high failure rate of the cylindrical cell diameter detection method provided in the related art.

Other features and advantages of the present disclosure will become apparent by the following detailed description, or will be partially acquired by practicing the present disclosure.

According to an aspect of the present disclosure, there is provided a control method for cylindrical battery core winding, comprising obtaining a real-time diameter of a current component, where the current component comprises a current winding core or a current winding layer; calculating a real-time offset value according to the real-time diameter of the current component and a preset target diameter; determining a target pressure value of an embossing mechanism corresponding to the real-time offset value based on a preset corresponding relationship; and adjusting a diameter of a next component by controlling the embossing mechanism to operate at the target pressure value and driving an embossing roller of the embossing mechanism to emboss a cathode sheet or an anode sheet in the next component, where the next component comprises a next winding core or a next winding layer corresponding to the current component.

In an embodiment of the present disclosure, when the current component is the current winding core, and obtaining the real-time diameter of the current component comprises obtaining an initial pulse number of an outer separator encoding roller when winding a last turn of a separator of the current winding core and an end pulse number of the outer separator encoding roller when cutting off the separator; and calculating the real-time diameter of the current winding core according to the initial pulse number, the end pulse number, a diameter of the outer separator encoding roller and a pulse count accumulated for a rotating circle of the outer separator encoding roller.

In an embodiment of the present disclosure, the method further comprises obtaining a separator thickness when cutting off the separator; and obtaining a corrected real-time diameter by correcting the real-time diameter of the current winding core according to the separator thickness.

In an embodiment of the present disclosure, the method further comprises obtaining a device factor compensation value; and obtaining a compensated real-time diameter by compensating the real-time diameter of the current winding core according to the device factor compensation value.

In an embodiment of the present disclosure, obtaining the real-time diameter of the current component comprises obtaining the real-time diameter of the current component according to a distance sensor.

In an embodiment of the present disclosure, when the current component is the current winding layer, and calculating the real-time offset value based on the real-time diameter of the current component and the preset target diameter comprises determining the preset target diameter of the current winding layer; and calculating an average offset value of the current winding layer based on a winding core diameter of the current winding layer, the preset target diameter of the current winding layer and a number of turns corresponding to the current winding layer.

In an embodiment of the present disclosure, determining the preset target diameter of the current winding layer comprises obtaining the number of turns corresponding to the current winding layer; and determining the preset target diameter of the current winding layer based on the number of turns corresponding to the current winding layer, a preset winding layer target thickness and a preset winding needle initial thickness.

According to another aspect of the present disclosure, there is provided a control device for cylindrical battery cell winding, comprising a diameter acquisition module, configured to acquire a real-time diameter of a current component, where the current component comprises a current winding core or a current winding layer; an offset calculation module, configured to calculate a real-time offset value according to the real-time diameter of the current component and a preset target diameter; an air pressure matching module, configured to determine a target pressure value of an embossing mechanism corresponding to the real-time offset value based on a preset corresponding relationship; and an embossing control module, configured to adjust a diameter of a next component by controlling the embossing mechanism to operate at the target pressure value, and driving an embossing roller of the embossing mechanism to emboss a cathode sheet or an anode sheet in the next component, where the next component comprises a next winding core or a next winding layer corresponding to the current component.

According to still another aspect of the present disclosure, there is provided an electronic device, comprising a processor; and a memory, configured to store executable instructions of the processor; where the processor is configured to execute the above control method for cylindrical battery cell winding by executing the executable instructions.

According to still yet another aspect of the present disclosure, there is provided a non-transitory computer-readable storage medium having a computer program stored thereon, when the computer program is executed by a processor, the control method for cylindrical battery cell winding is implemented.

According to another aspect of the present disclosure, there is provided a computer program product. The computer program product comprises computer programs and computer instructions. The computer programs and the computer instructions are loaded and executed by a process and the computer is configured to implement the above control method for cylindrical battery cell winding.

It should be understood that the above general description and the detailed description that follows are exemplary and explanatory only and do not limit the present disclosure.

## BRIEF DESCRIPTION OF THE DRAWINGS

The drawings herein are incorporated into the specification and constitute a part of the specification, showing embodiments consistent with the present disclosure, and are used together with the specification to explain the principles of the present disclosure. Obviously, the drawings described below are only some embodiments of the present disclosure. For those skilled in the art, other drawings can also be obtained based on these drawings without creative work.

FIG. 1 shows a structural schematic diagram of a residential energy storage system provided by an embodiment of the present disclosure.

FIG. 2 shows a stereoscopic diagram of a cylindrical battery cell provided by an embodiment of the present disclosure.

FIG. 3 shows a flow chart of a control method for cylindrical battery cell winding provided by an embodiment of the present disclosure.

FIG. 4 shows a structural schematic diagram of an embossing mechanism provided by an embodiment of the present disclosure.

FIG. 5 shows a structural schematic diagram of a cathode sheet after embossing provided by an embodiment of the present disclosure.

FIG. 6 shows a cross-sectional view of a winding core provided by an embodiment of the present disclosure.

FIG. 7 shows a flow chart of a method for calculating a real-time diameter of a current winding core provided by an embodiment of the present disclosure.

FIG. 8 shows a schematic diagram of the principle of calculating a real-time diameter of a current winding core provided by an embodiment of the present disclosure.

FIG. 9 shows another flow chart of a method for calculating a real-time diameter of a current winding core provided by an embodiment of the present disclosure.

FIG. 10 shows still another flow chart of a method for calculating a real-time diameter of a current winding core provided by an embodiment of the present disclosure.

FIG. 11 shows a flow chart of a method for calculating an average offset value of a current winding layer provided by an embodiment of the present disclosure.

FIG. 12 shows a flow chart of a method for determining a real-time diameter of a current winding layer provided by an embodiment of the present disclosure.

FIG. 13 shows a flow chart of a method for determining a preset target diameter of a current winding layer provided by an embodiment of the present disclosure.

FIG. 14 shows a schematic diagram of a structure of a winding layer thickness provided by an embodiment of the present disclosure.

FIG. 15 shows a line graph of a change of a cylindrical winding core diameter with a target pressure value provided by an embodiment of the present disclosure.

FIG. 16 shows a schematic diagram of a structure of a control device for cylindrical battery cell winding provided by an embodiment of the present disclosure.

FIG. 17 shows a schematic diagram of a structure of an electronic device provided by an embodiment of the present disclosure.

## DETAILED DESCRIPTION

The preferred embodiments of the present disclosure will be described in more detail below with reference to the accompanying drawings. Although the preferred embodiments of the present disclosure are shown in the accompanying drawings, it should be understood that the present disclosure can be implemented in various forms and should not be limited by the embodiments described herein. On the contrary, these embodiments are provided to make the present disclosure more thorough and complete, and to fully convey the scope of the present disclosure to those skilled in the art.

The terms "first" and "second" in the text are only used for descriptive purposes, and cannot be understood as indicating or implying relative importance or implicitly indicating the number of technical features indicated. Therefore, the features defined as "first" and "second" may explicitly or implicitly comprise one or more of the features. In the description of the present disclosure, the meaning of "multiple" is two or more, unless otherwise clearly stated that it is a limitation.

In the description of the present disclosure, it should be noted that, unless otherwise clearly specified and limited, the terms "installed", "connected", and "coupled" should be understood in a broad sense. For example, it can be a fixed connection, a detachable connection, or an integral connection; it can be a mechanical connection, an electrical connection, or can communicate with each other; it can be directly connected, or indirectly connected through an intermediate medium; it can be the internal connection of two elements or the interaction relationship between two elements. For those skilled in the art, the specific meanings of the above terms in this disclosure can be understood according to the specific circumstances.

The disclosure below provides many different implementations or examples to implement different structures of the present disclosure. In order to simplify the present disclosure, the components and settings of specific examples are described below. Of course, they are only examples and are not intended to limit the present disclosure. In addition, the present disclosure may repeat reference numbers and/or reference letters in different examples. This repetition is for the purpose of simplification and clarity, and does not itself indicate the relationship between the various implementations and/or settings discussed.

Since the energy needed by people has strong temporal and spatial characteristics, in order to reasonably use energy and improve energy utilization, a medium or device is needed to to store one form of energy in the same form of energy or to convert it into another form of energy, and then release it in a specific form of energy based on future application needs. At present, the main way to generate green electricity is to develop green energy such as photovoltaics and wind power to replace fossil energy.

At present, the generation of green electricity generally relies on photovoltaics, wind power, water potential, etc., while wind and solar energy generally have problems of strong intermittency and large volatility, which will cause instability of the power grid, insufficient electricity during peak hours, and too much electricity during valley hours. Unstable voltage will also cause damage to electricity. Therefore, insufficient electricity demand or insufficient grid acceptance capacity may cause problems of "curtailment of wind and solar power". To solve these problems, we must rely on energy storage. That is, converting electrical energy into other forms of energy through physical or chemical means and storing it, and converting energy into electrical energy and releasing it when needed. In simple terms, energy storage is like a large "power bank". When photovoltaic and wind energy are sufficient, electrical energy is stored and the stored electricity is released when needed.

Taking electrochemical energy storage as an example, this solution provides an energy storage device 100. The energy storage device 100 is provided with a group of chemical batteries. The chemical elements in the battery are mainly used as energy storage media. The charging and discharging process is accompanied by chemical reactions or changes in the energy storage media. In simple terms, the electric energy generated by wind and solar energy is stored in the chemical battery. When the use of external electric energy reaches a peak, the stored electricity is released for use, or transferred to places where electricity is scarce for use.

The current energy storage (i.e. storage of energy) application scenarios are relatively wide, comprising energy storage on the power generation side, energy storage on the grid side, and energy storage on the power consumption side. The corresponding types of energy storage devices 100 comprise:

(1) Large energy storage power stations used on the wind power and photovoltaic power station side, which can assist renewable energy generation to meet grid connection requirements and improve the utilization rate of renewable energy. As a high-quality active/reactive regulating power source on the power supply side, the energy storage power station realizes load matching of electric energy in time and space, enhances the capacity to absorb renewable energy, reduces instantaneous power changes, reduces the impact on the power grid, improves the problem of new energy power generation consumption, and is of great significance in the back-up of the power grid system, alleviating the pressure on power supply during the peak load periods, peak load regulation and frequency regulation.

(2) Energy storage containers used on the grid side, which mainly have the functions of peak load regulation, frequency regulation, and alleviating grid congestion. In terms of peak regulation, it can realize peak shaving and valley filling of power load, that is, charging the energy storage battery when the power load is low, and releasing the stored electricity during the peak load period, so as to achieve a balance between power generation and consumption;

(3) Small energy storage boxes used on the power consumption side, which mainly have the functions of self-generation and self-use of electricity, peak-valley price arbitrage, capacity cost management and improving power supply reliability. According to different application scenarios, energy storage on the power consumption side can be classified into industrial and commercial energy storage boxes, household energy storage devices, energy storage charging piles, etc., which are generally used in conjunction with distributed photovoltaics. Industrial and commercial users can use energy storage for valley-peak price arbitrage and capacity cost management. In the power market that implements peak-valley electricity prices, by charging the energy storage system when the electricity price is low and discharging the energy storage system when the electricity price is high, peak-valley electricity price arbitrage can be achieved to reduce electricity costs. In addition, industrial enterprises that are subject to the two-part electricity price can use the energy storage system to store energy during low electricity consumption and discharge it during peak load, thereby reducing peak power and the maximum demand reported, and achieving the purpose of reducing capacity electricity charges. Household photovoltaic storage can improve the level of self-generation and self-use of electricity. Due to high electricity prices and poor power supply stability, the demand for household photovoltaic installations has been driven. Considering that photovoltaics generate electricity during the day, and users generally have higher loads at night, by configuring energy storage, photovoltaic power can be better utilized, the level of self-generation and self-use can be improved, and the cost of electricity can be reduced. In addition, communication base stations, data centers and other fields need to configure energy storage for backup power.

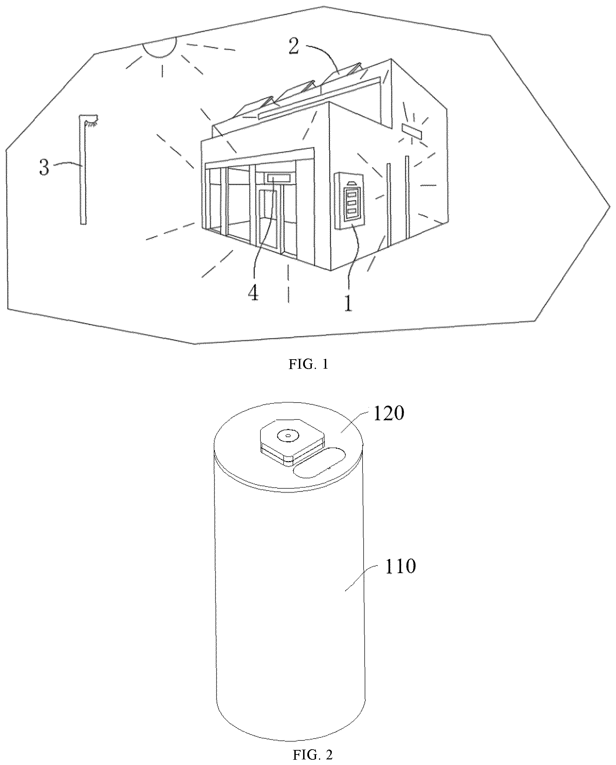

Please refer to FIG. 1, which is a structural schematic diagram of a household energy storage system of an embodiment of the present disclosure, and the embodiment of FIG. 1 of the present disclosure takes the household energy storage scenario in the user-side energy storage as an example for explanation, and the energy storage device of the present disclosure is not limited to the household energy storage scenario.

The present disclosure provides a household energy storage system, which comprises an energy conversion device 2 (photovoltaic panel), a first user load 3 (street lamp), a second user load 4 (such as a household appliance such as an air conditioner), etc., and an energy storage device 1. The energy storage device 1 is a small energy storage box that can be mounted on an outdoor wall by wall hanging. Specifically, the photovoltaic panel can convert solar energy into electric energy during the low electricity price period, and the energy storage device 1 is configured to store the electric energy and supply it to street lamps and household appliances for use during the peak electricity price period, or to supply power when the power grid is out of power/power outage.

The number of energy storage devices 1 can be multiple, and multiple energy storage devices 1 are connected in series or in parallel with each other, and multiple energy storage devices 1 are supported and electrically connected by isolation plates (not shown). In this embodiment, "multiple" refers to two or more. An energy storage box can also be provided outside the energy storage device 1 to accommodate the energy storage device 1.

In some embodiments, the energy storage device 1 may comprise but is not limited to a single cell, a battery module, a battery pack, a battery system, etc. The actual application form of the energy storage device 1 provided in the embodiment of the present disclosure may be, but is not limited to, the listed products, and may also be other application forms. The embodiment of the present disclosure does not strictly limit the application form of the energy storage device 1. The embodiment of the present disclosure takes a cylindrical battery cell as an example solely for the purpose of illustrating the energy storage device.

FIG. 2 shows a three-dimensional view of a cylindrical battery cell provided in the embodiment of the present disclosure. As shown in FIG. 2, the cylindrical battery cell of the present disclosure comprises a shell 110, a winding core and a top cover assembly 120, etc. The shell 110 is provided with a cavity for accommodating the winding core, and the top cover assembly 120 covers the opening of the cavity to seal the cavity and fix the winding core in the shell 110.

During the production process of the winding core, the winding layer consisting of the anode sheet, the cathode sheet and the two separators is wound on the winding needle. The anode sheet, the cathode sheet and the two separators are respectively guided to the winding needle by rollers, and an embossing mechanism is provided on the transmission path of the anode sheet and/or the cathode sheet, so that the electrode sheet is embossed by the embossing mechanism.

The diameter of the winding core is mainly determined by the thickness and length of the winding layer (the winding layer comprises the anode sheet, the cathode sheet and the separators) and the diameter of the winding needle. At the same time, the diameter of the winding core is affected by the winding tension. The length of the winding layer, the diameter of the winding needle, the thickness of the separator, the winding tension and other parameters are fixed values, which can be achieved by adjusting the process parameters in the winding process, and the above parameters are controllable. However, the thickness of the anode sheet or cathode sheet rebounds to varying degrees after rolling, especially the thickness rebound rate of the anode sheet is generally above 4%, and the rebound phenomenon is greatly affected by the compaction density of the electrode sheet, the ambient temperature and humidity, and the storage time of the electrode sheet. The rebound amount of the electrode sheet is uncontrollable.

Considering the process capability problem of the previous rolling process, the distribution of the electrode sheet thickness in the width and length directions is not uniform, but the electrode sheet thickness in the width and length directions is randomly distributed within the range of process parameters. There may be a situation where the area with the smallest cathode sheet thickness in the winding layer is set relative to the area with the smallest anode sheet thickness in the winding layer, resulting in the problem of a small diameter of the battery cell, so the process corresponding to the electrode sheet thickness is also uncontrollable.

In one case, for a large cylindrical cell, the number of winding layers of the cylindrical cell is generally more than 50 layers, and one winding layer comprises one anode sheet, one cathode sheet and two separators. For the number of winding layers n, the thickness of the anode sheet or the thickness of the cathode sheet changes by $b\mu m$, and the core diameter changes by $0.002 \times n \times b$mm. For n=50, b=1$\mu m$, the core diameter changes by 0.1mm, and as the number of winding layers increases, the core diameter changes more. When the core diameter changes too much, it will have an adverse effect on winding core into shell, collector plate welding, battery cycle performance, etc.

In order to at least partially solve the above technical problems, the present disclosure provides a control method for cylindrical battery cell winding. By obtaining the real-time diameter of the current component, the real-time offset value is calculated according to the real-time diameter of the current component and the preset target diameter, the target pressure value of the embossing mechanism corresponding to the real-time offset value is determined based on the preset corresponding relationship, the embossing mechanism is controlled to operate at the target pressure value, and the embossing roller of the embossing mechanism is driven to emboss the cathode sheet or the anode sheet in the next component to adjust the diameter of the next component. On the one hand, by adjusting the pressure value acting on the cathode sheet, the embossing depth of the cathode sheet is adjusted, and the thickness of the cathode sheet also changes accordingly, thereby playing a role in adjusting the winding core diameter. On the other hand, the embossing structure of the cathode sheet can also increase the distance between the cathode sheet and the anode sheet, reserve space for the full charge rebound of the anode sheet, reduce the stress between the anode sheet and the cathode sheet, improve the battery cell expansion, increase the exhaust channel inside the battery cell, and reduce the risk of thermal runaway of the battery cell.

The following is a detailed description of this example implementation in conjunction with the accompanying drawings and embodiments.

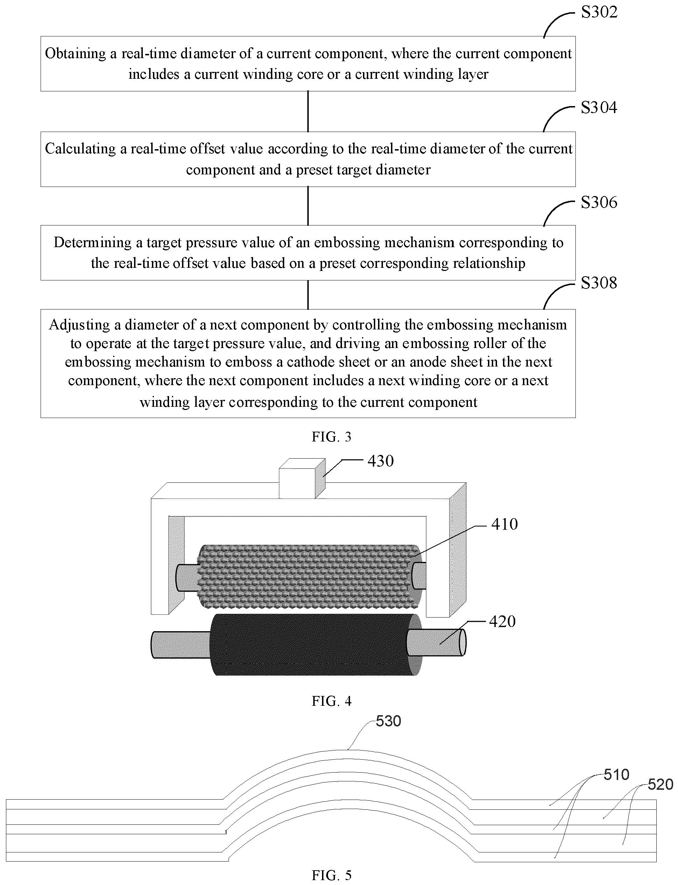

FIG. 3 shows a flow chart of a control method for cylindrical battery cell winding provided by an embodiment of the present disclosure. As shown in FIG. 3, in one embodiment, the control method for the cylindrical battery cell winding provided by the embodiment of the present disclosure comprises the following steps:

S302, obtaining a real-time diameter of a current component, where the current component comprises a current winding core or a current winding layer.

In one embodiment, the current component can be the current winding core. The current winding core is the finished winding core product after the winding layer is wound, and the real-time diameter of the subsequent produced winding core is controlled by the real-time diameter of the current winding core. It should be noted that when the current component is the current winding core, the winding core diameter is the battery cell diameter.

The current component can also be the current winding layer. The current winding layer is the semi-finished winding core product that is currently undergoing the winding process of the winding layer, and the current winding layer is the outermost winding layer wound on the winding needle.

In one embodiment, the embossing mechanism can use a preset pressure value to drive the embossing roller of the embossing mechanism to emboss the anode sheet or the cathode sheet. As shown in FIG. 4, the embossing mechanism comprises an embossing roller 410 and a rubber roller 420 arranged in parallel with each other, and the electrode sheet passes through the gap between the embossing roller 410 and the rubber roller 420. The surface of the embossing roller 410 is provided with a concavo-convex structure, and the embossing roller 410 and the rubber roller 420 are arranged to rotate relative to each other. The embossing roller 410 is arranged on the first frame, and the first frame is connected to the cylinder 430. When a preset pressure value is output to the cylinder 430, the cylinder 430 can drive the embossing roller 410 to move toward the rubber roller 420, so that the embossing roller 410 acts on the electrode sheet, and an embossing structure corresponding to the concavo-convex structure is formed on the electrode sheet. When the embossing roller 410 and the rubber roller 420 rotate relative to each other, the electrode sheet is wound on the winding core.

The embossed shape of the electrode sheet may be at least one of a circle, a regular polygon, and an irregular polygon. The regular polygon may comprise a triangle, a rectangle, etc., which is not specifically limited in the present disclosure.

As shown in FIG. 5, the anode sheet or cathode sheet may comprise multiple conductive layers 510 and coatings 520 disposed between adjacent conductive layers 510. The conductive layer 510 may be selected as a foil material, and the coating 520 is configured to attach the multiple conductive layers 510 together, thereby improving the strength of the electrode sheet. After the electrode sheet is embossed, a plurality of convex points 530 are formed on the electrode sheet.

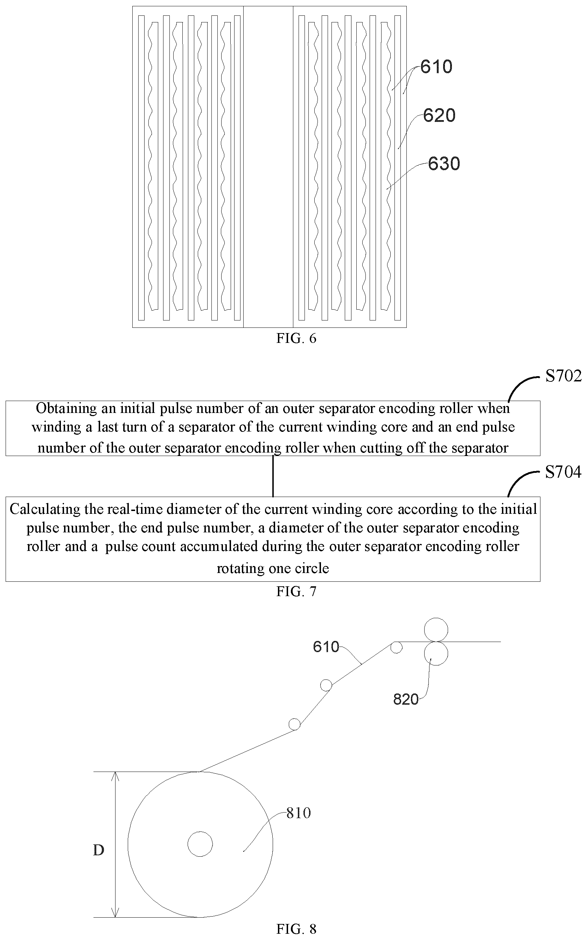

As shown in FIG. 6, a winding layer comprises a cathode sheet 630, an anode sheet 620, and two separators 610, where they are arranged in sequence from the cathode sheet, separator, the anode sheet to the separators in the direction away from the winding needle. When the cathode sheet 630 is embossed, the convex point of the cathode sheet 630 bulges toward the direction of the anode sheet 620; when the anode sheet 620 is embossed, the convex point of the anode sheet 620 bulges toward the cathode sheet 630, so that the distance between the cathode sheet 630 and the anode sheet 620 can be increased through the embossing structure of the electrode sheet, and sufficient space is reserved for the full charge rebound of the anode sheet 620, and the stress between the cathode sheet 630 and the anode sheet 620 is reduced, and the expansion of the battery cell is effectively improved. At the same time, the gap between the two electrode sheets also increases the exhaust channel inside the battery cell, and improves the thermal runaway problem of the battery cell.

In one embodiment, the embossing mechanism should be as close to the winding turret as possible, thereby reducing the large-angle belt conveyance and the roller passage of the electrode sheet after embossing, and preventing the force between the electrode sheet and the roller from deforming and damaging the embossing shape.

S304, calculating a real-time offset value according to the real-time diameter of the current component and a preset target diameter.

The preset target diameter is the diameter of the component that is expected to be obtained in the product, and is derived from product design. The preset target diameter should be more than 1mm larger than the winding core diameter when the winding layer thickness is at the upper limit of the process requirements and there is no embossing on the surface of the electrode sheet, so as to avoid a situation where this control method can only adjust for cases where the winding layer thickness is too small, and cannot effectively control incoming materials that are excessively thick.

When the current component is the current winding core, the above preset target diameter is the target diameter of the winding core; when the current component is the current winding layer, the above preset target diameter is the target diameter of the outermost winding layer wound on the winding needle.

In one embodiment, the real-time offset value can be the difference between the preset target diameter and the real-time diameter of the current component.

S306, determining a target pressure value of an embossing mechanism corresponding to the real-time offset value based on a preset corresponding relationship.

In one embodiment, the preset corresponding relationship can be pre-configured in an electronic device, such as a control device for cylindrical battery cell winding, and the preset corresponding relationship is configured to characterize the corresponding relationship between the offset value and the target pressure value of the embossing mechanism.

The preset corresponding relationship can be represented by a corresponding relationship table, a corresponding relationship curve, etc.

The preset corresponding relationship can be determined based on experiments. For example, by setting the pressure value of the embossing mechanism with a certain gradient, the offset values corresponding to different pressure values can be obtained. Multiple sets of offset value and pressure value data are fitted to obtain a mathematical model with the pressure value as the independent variable and the offset value as the dependent variable. Usually, the offset value and the pressure value are linearly related, and the offset value gradually increases as the pressure value increases.

S308, adjusting a diameter of a next component by controlling the embossing mechanism to operate at the target pressure value, and driving an embossing roller of the embossing mechanism to emboss a cathode sheet or an anode sheet in the next component, where the next component comprises a next winding core or a next winding layer corresponding to the current component.

In one embodiment, based on the preset corresponding relationship, after obtaining the target pressure value of the embossing mechanism corresponding to the real-time offset value, the air pressure value of the cylinder is adjusted from the preset pressure value to the target pressure value to drive the cathode sheet of the next component to emboss.

The current component is the current winding core, and the next component is the next winding core corresponding to the current winding core. The next winding core can be the winding core of the next batch or the winding core produced subsequently. As long as the winding core is made of the same material and produced after the current winding core, it is applicable.

When the real-time offset value of the current winding core increases, the target pressure value for producing the next winding core is greater than the preset pressure value for producing the current winding core. In this case, when preparing the next winding core, the cylinder drives the embossing roller moving toward the rubber roller, so that the pressure value applied by the embossing roller to the electrode sheet increases, and the embossing depth of the manufactured electrode sheet increases, thereby increasing the thickness of the winding layer of the next winding core, achieving the purpose of increasing the winding core diameter of the next winding core, and then making the winding core diameter of the next winding core close to the preset target diameter.

When the real-time offset value of the current winding core is less than 0, it indicates that the winding core diameter of the current winding core is too large. At this time, it is necessary to reduce the target pressure value of the next winding core, that is, the target pressure value for producing the next winding core is less than the preset pressure value for producing the current winding core. At this time, when preparing the next winding core, the pressure value applied by the embossing roller to the electrode sheet is smaller than the pressure value when preparing the current winding core, thereby reducing the thickness of the winding layer of the next winding core, achieving the purpose of reducing the winding core diameter of the next winding core, and avoiding the occurrence of defective products due to excessive winding core diameter.

It should be noted that for the diameter adjustment of the winding core product, a constant pressure value can be used in the process of preparing the current winding core and the next winding core, that is, the cylinder pressure is not adjusted during the winding core production process.

For the case where the current component is the current winding layer, the next component can be the next winding layer corresponding to the current winding layer. In this case, the next winding layer is the winding layer adjacent to the current winding layer. For example, the current winding layer is the 25th layer of the winding core, and the next winding layer can be the 26th layer of the winding core.

In one embodiment, the next component can also be a winding layer wound on the winding needle after the current winding layer in the same winding core. In this case, the next winding layer is not adjacent to the current winding layer. For example, the pressure value for producing subsequent multiple winding layers is controlled by the diameter of the current winding layer.

It should be noted that the adjustment process and the adjustment method for the pressure values of the winding layer and the winding core, which are the targets of adjustment, are similar, and will not be repeated here.

In the embodiment of the present disclosure, by obtaining the real-time diameter of the current component, the real-time offset value is calculated according to the real-time diameter of the current component and the preset target diameter, the target pressure value of the embossing mechanism corresponding to the real-time offset value is determined based on the preset corresponding relationship, the embossing mechanism is controlled to operate at the target pressure value, and the embossing roller of the embossing mechanism is driven to emboss the cathode sheet or the anode sheet in the next component to adjust the diameter of the next component. On the one hand, by adjusting the pressure value acting on the cathode sheet, the embossing depth of the cathode sheet is adjusted, and the thickness of the cathode sheet also changes accordingly, thereby playing a role in adjusting the winding core diameter. On the other hand, the embossing structure of the cathode sheet can also increase the distance between the cathode sheet and the anode sheet, reserve space for the full charge rebound of the anode sheet, reduce the stress between the anode sheet and the cathode sheet, improve the battery cell expansion, increase the exhaust channel inside the battery cell, and reduce the risk of thermal runaway of the battery cell.

FIG. 7 shows a flow chart of a method for calculating the real-time diameter of the current winding core provided by the embodiment of the present disclosure. As shown in FIG. 7, in one embodiment, when the current component is the current winding core, obtaining the real-time diameter of the current component at the above S302, comprises:

S702, obtaining an initial pulse number of an outer separator encoding roller when winding a last turn of a separator of the current winding core and an end pulse number of the outer separator encoding roller when cutting off the separator;

S704, calculating the real-time diameter of the current winding core according to the initial pulse number, the end pulse number, a diameter of the outer separator encoding roller and a pulse count accumulated for a rotating circle of the outer separator encoding roller.

In one embodiment, the real-time diameter of the current winding core can be acquired by the diameter acquisition module, and the diameter acquisition module can be a measurement mechanism for winding core diameter, and the measurement mechanism for the winding core diameter can be set as close to the winding turret as possible, thereby reducing the number of winding cores between the diameter acquisition module and the control device for cylindrical battery cell winding, and ensuring the timeliness of the feedback chain.

In one embodiment, the diameter acquisition module is set at the winding needle to make the entire feedback chain or response chain shortest.

Since the number of winding layers of the winding core is fixed, the winding core diameter changes with the change of the electrode sheet thickness, winding tension, and the pre-winding length of the separator and the electrode sheet, so that the length of the last layer of separator of the winding core changes. That is, since the thickness of the separator hardly changes, the length of the last turn of the separator can be used to calculate the real-time diameter of the current winding core.

Assuming that the length of the last turn of the separator is L, the real-time diameter D of the current winding core can be expressed by formula 1:

$$D = L/\pi \quad \text{(Formula 1)}$$

As shown in FIG. 8, the pulse count accumulated for a rotating circle of the outer separator encoding roller 820 is m, and the diameter of the encoding roller 820 is d. Then the length L0 corresponding to one pulse of the encoding roller 820 is expressed by formula 2:

$$L0=\pi d/m \text{ (Formula 2)}$$

where m can be pre-configured in the control device for the cylindrical battery cell winding.

The number of winding layers of the winding core 810 is n. When the winding needle rotates n-1 turns, the pulse number of the outer separator encoding roller 820 at this time is recorded as the initial pulse number, recorded as m0. When the separator 610 is cut off, the pulse number of the outer separator encoding roller 820 at this time is recorded as the end pulse number m1. The length L of the last turn of separator is expressed by formula three:

$$L=(m1-m0)\times L0 \text{ (Formula three)}$$

According to the above three formulas, the real-time diameter of the current winding core can be obtained as follows:

$$D=(m1-m0)\times L0/\pi \text{ (Formula four)}$$

In the embodiment of the present disclosure, by recording the initial pulse number and the end pulse number of the last turn of the outer separator encoding roller of the current winding core, the length of the last turn of separator is calculated according to the initial pulse number and the end pulse number, and the real-time diameter of the current winding core is determined according to the length of the last turn of separator, so as to accurately determine the diameter of the current winding core, provide accurate data support for the pressure value adjustment, and improve the accuracy of the winding control of the cylindrical battery cell.

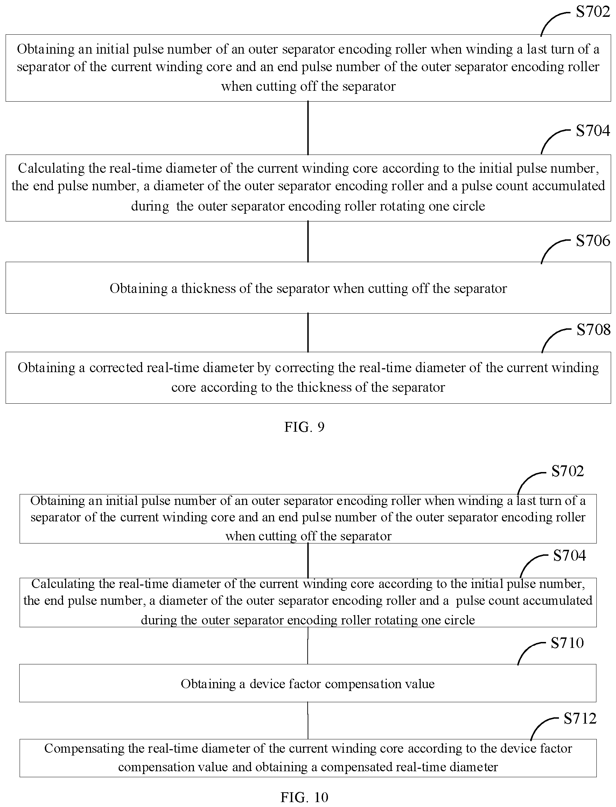

FIG. 9 shows a flow chart of another method for calculating the real-time diameter of the current winding core provided by an embodiment of the present disclosure. Based on the embodiment of FIG. 7, S706 to S708 are added to limit the situation where the diameter of the current winding core is corrected according to the thickness of the cut-off separator. In one embodiment, as shown in FIG. 9, the method comprises S702 to S708, where:

S706, obtaining a thickness of the separator when cutting off the separator;

S708, obtaining a corrected real-time diameter by correcting the real-time diameter of the current winding core according to the thickness of the separator.

It should be noted that the implementation of S702~S704 in this embodiment is the same as the implementation of S702~S704 in the aforementioned embodiment, and will not be repeated here.

It should be noted that there is no order of execution of S704 and S706, and S706 can be before S704 or after S704, which is not specifically limited in this disclosure.

When the separator is cut off, the thickness of the separator can be measured by measuring tools such as micrometers.

When the thickness of the separator is c, the real-time diameter of the current component is corrected, and the corrected real-time diameter D' can be expressed by formula five:

$$D'=D+\alpha\times c=(m1-m0)\times L0/\pi+\alpha\times c \text{ (Formula Five)}$$

where $\alpha$ is the correction coefficient, for example, $\alpha=2$.

It should be noted that there is a certain free section after the separator is cut off. The above-mentioned free section is short in length and is much smaller than the length of the outermost turn of the winding core, so the free section is not considered and is ignored.

In the embodiment of the present disclosure, the diameter of the current winding core is corrected by the thickness of the separator when the separator is cut off, so as to improve the collection accuracy of the winding core diameter and further improve the accuracy of the winding control of the cylindrical battery cell.

FIG. 10 shows a flow chart of still another method for calculating the real-time diameter of the current winding core provided by the embodiment of the present disclosure. On the basis of FIG. 7 or FIG. 9, S710~S712 are further added to limit the situation where a device factor compensation value compensates for the diameter of the current winding core. In one embodiment, as shown in FIG. 10, the method comprises S702~S704, S710~S712, or the method comprises S702~S712, where:

S710, obtaining a device factor compensation value;
S712, compensating the real-time diameter of the current winding core according to the device factor compensation value and obtaining a compensated real-time diameter.

It should be noted that the implementation of S702~S704 in this embodiment is the same as the implementation of S702~S704 in the previous embodiment, or the implementation of S702~S708 in this embodiment is the same as the implementation of S702~S708 in the previous embodiment, which will not be repeated here.

It should be noted that there is no order of execution of S708 and S704, S708 can also be before S704 or after S704, and the present disclosure does not make specific restrictions.

The device factor compensation value can be obtained by calibrating the device.

In one embodiment, if the device factor compensation value is B, the real-time diameter of the current component is compensated according to the device factor compensation value, and the compensated real-time diameter D'' is expressed by formula six:

$$D''=D+B=(m1-m0)\times L0/\pi+B \text{ (Formula six)}$$

In another embodiment, the real-time diameter of the current component can also be corrected by the separator thickness when the separator is cut off and the device factor compensation value. In this case, the real-time diameter of the current winding core is expressed by formula seven:

$$D'''=D+\alpha\times c+B=(m1-m0)\times L0/\pi+\alpha\times c+B \text{ (Formula seven)}$$

In this embodiment, the diameter of the current winding core is corrected by the device factor compensation value, the collection accuracy of the winding core diameter is improved, and the accuracy of the winding control of the cylindrical battery cell is further improved.

In one embodiment, the preset corresponding relationship comprises a first preset corresponding relationship. The first preset corresponding relationship is configured to characterize the corresponding relationship between the offset value and the pressure value of the embossing mechanism. Before determining the target pressure value of the embossing mechanism corresponding to the real-time offset value based on the preset corresponding relationship, the method further comprises constructing the first preset corresponding relationship.

When the current component is the current winding core, the first preset corresponding relationship can be pre-constructed to determine the corresponding relationship between the offset value between the real-time diameter of the current winding core and the preset target diameter and the pressure value of the embossing mechanism.

The first preset corresponding relationship can record the relationship between the offset value and the pressure value of the embossing mechanism in the form of a table, a curve, etc.

The pressure value of the embossing roller can be set according to a certain gradient, and the offset values between the diameter of the winding core and the preset target diameter corresponding to different pressure values can be obtained respectively. By fitting the obtained data sets, a mathematical model that describes the mathematical relationship between the offset value and the pressure value of the embossing mechanism is obtained, and the construction of the first preset corresponding relationship is completed.

Usually, the offset is linearly related to the pressure value of the embossing mechanism, and the first preset corresponding relationship satisfies:

$$\Delta D=K\times V+b \text{ (Formula 8)}$$

where $\Delta D$ is the offset value, K is the slope obtained by data fitting, V is the pressure value, and b is the slope obtained by data fitting.

In the embodiment of the present disclosure, the corresponding relationship between the offset value of the current winding core and the pressure value of the embossing mechanism is constructed by data fitting, so that the pressure value of the embossing mechanism can be adjusted conveniently and quickly, and the efficiency of the winding control of the cylindrical battery cell can be improved.

In one embodiment, at S308, adjusting the diameter of the next component by controlling the embossing mechanism to operate at the target pressure value, and driving the embossing roller of the embossing mechanism to emboss the cathode sheet or the anode sheet in the next component comprises adjusting the diameter of the next winding core by controlling the embossing mechanism to operate at the target pressure value, and driving the embossing roller to emboss the cathode sheet or anode sheet in the next winding core.

After determining the target pressure value of the embossing mechanism according to the first preset corresponding relationship, the pressure value of the embossing mechanism is adjusted from the preset pressure value to the target pressure value, the cylinder operates at the target pressure value, and the cylinder drives the embossing roller to emboss the cathode sheet of the next winding core, thereby adjusting the thickness of the cathode sheet. After the thickness of the cathode sheet changes, the thickness of the winding layer changes accordingly, thereby affecting the diameter of the winding core, realizing the control of the diameter of the cylindrical battery cell, and effectively preventing the situation where the battery cell diameter does not meet the requirements.

In one embodiment, at the above S302, obtaining the real-time diameter of the current component comprises obtaining the real-time diameter of the current component according to the distance sensor.

In addition to using the length of the last turn of separator to determine the real-time diameter of the current component, the real-time diameter of the current component can also be directly obtained through the distance sensor, and the distance sensor can be set at the winding turret.

The distance sensor can not only obtain the diameter of the outermost winding layer of the winding core in real time, that is, the real-time diameter of the current winding core; the distance sensor can also obtain the diameter of a certain turn of winding layer during the production process of the winding core in real time, that is, the real-time diameter of the current winding layer.

In the embodiment of the present disclosure, obtaining the real-time diameter of the current component through the distance sensor can provide a faster diameter acquisition method and improve the accuracy of the winding control of the cylindrical battery cell.

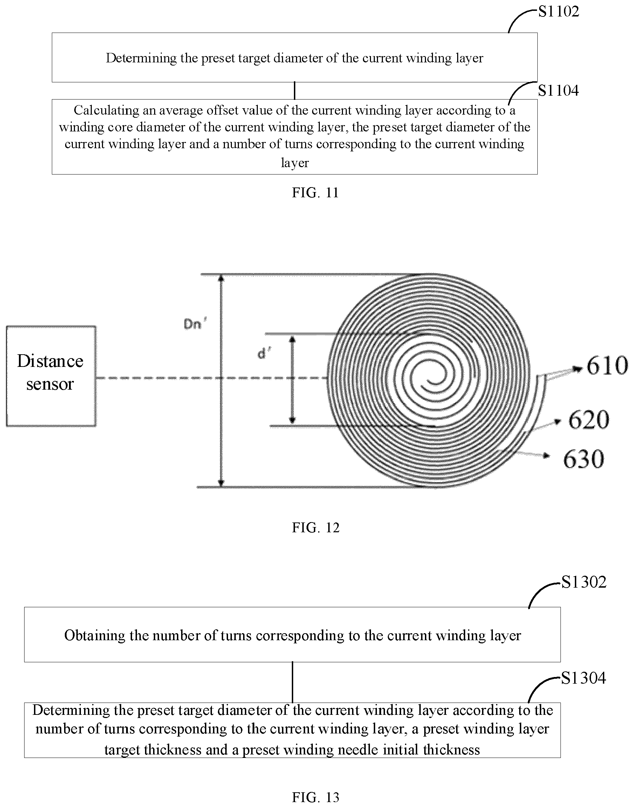

FIG. 11 shows a flow chart of a method for calculating an average offset value of the current winding layer provided in an embodiment of the present disclosure. As shown in FIG. 11, in one embodiment, when the current component is the current winding layer, at the above S304, calculating the real-time offset value according to the real-time diameter of the current component and the preset target diameter comprises:

S1102, determining the preset target diameter of the current winding layer;

S1104, calculating an average offset value of the current winding layer according to a winding core diameter of the current winding layer, the preset target diameter of the current winding layer and a number of turns corresponding to the current winding layer.

The preset target diameter of the current winding layer is the sum of the design thickness of the electrode sheet of the battery cell and the thickness of the separator.

In one embodiment, the preset target diameters of respective winding layers of the winding core can be recorded in the preset target diameter table to quickly determine the preset target diameter of the current winding layer.

As shown in FIG. 12, when the winding layers are wound around the winding needle in sequence, the distance sensor can directly collect the winding core diameter Dn' of the current winding layer. The difference between the preset target diameter Dn of the current winding layer and the winding core diameter Dn' of the current winding layer can be calculated to obtain the offset value dn' of the current winding layer. The ratio between the offset value of the current winding layer and the number of turns n ($n \geq 1$) corresponding to the current winding layer can be calculated to obtain the average offset value $\overline{d}$ of the current winding layer:

$$\overline{d} = \frac{dn'}{n} = (Dn - Dn')/n \text{ (Formula 9)}$$

In the embodiment of the present disclosure, by calculating the average offset value of the current winding layer, the individual thickness adjustment of respective winding layers in the winding core can be achieved, thereby offsetting the influence of the thickness of the electrode sheet in a single winding core.

As shown in FIG. 13, in one embodiment, at S1102, determining the preset target diameter of the current winding layer comprises:

S1302, obtaining the number of turns corresponding to the current winding layer;

S1304, determining the preset target diameter of the current winding layer according to the number of turns corresponding to the current winding layer, a preset winding layer target thickness and a preset winding needle initial thickness.

The number of turns corresponding to the current winding layer can be obtained by the counter.

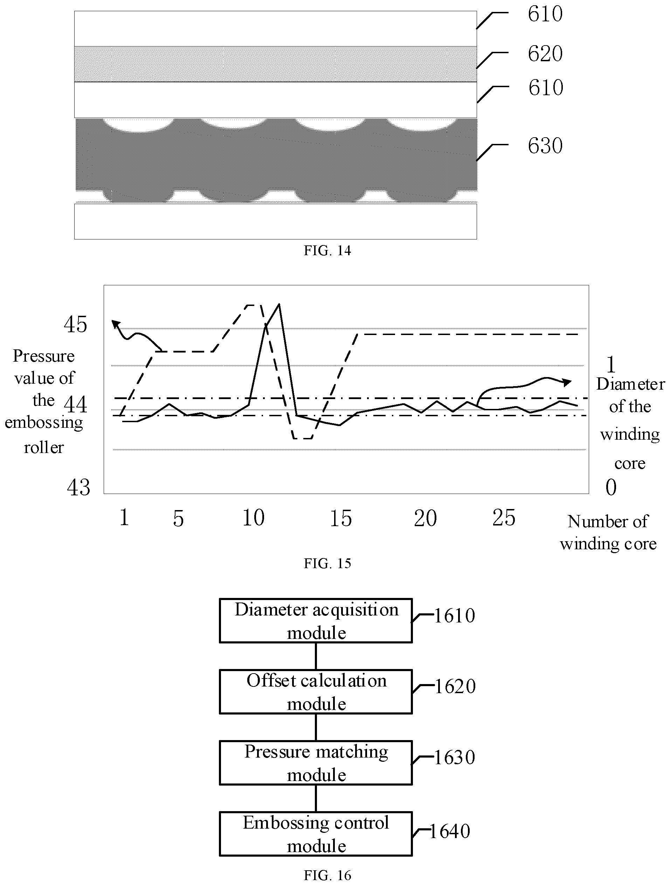

As shown in FIG. 12 and FIG. 14, a winding layer comprises a cathode sheet 630, an anode sheet 620 and two separators 610, where they are arranged in sequence from the cathode sheet 630, the separator 610, the anode sheet 620 to the separator 610 along the direction away from the winding needle.

The preset target thickness of the winding layer is the target thickness of one winding layer. In this case, the preset target thickness of the winding layer is the sum of the thickness of one cathode sheet, the thickness of one anode sheet and the thickness of two separators. Then, when the winding layer is wound on the winding needle, the diameter Dn can be:

$$Dn=2×n×t+d' \text{ (Formula 10)}$$

where n is the number of turns corresponding to the winding layer, t is the target thickness of one winding layer, d' is the preset initial thickness of the winding needle, and d' is the sum of the winding needle diameter and the thickness of the pre-winding separator.

In the embodiment of the present disclosure, by real-time acquisition of the real-time diameter of the current winding layer, the air pressure value of the embossing roller can be adjusted and controlled in real time according to the change of the winding core diameter, and then the diameter of each turn of winding layer of the winding core can be adjusted and controlled, thereby improving the consistency of the winding core diameter.

In one embodiment, the preset corresponding relationship comprises a second preset corresponding relationship. The second preset corresponding relationship is used to characterize the corresponding relationship between the average offset value of the winding layer and the pressure value of the embossing mechanism. Before determining the target pressure value of the embossing mechanism corresponding to the real-time offset value based on the preset corresponding relationship in S306, the method further comprises constructing the second preset corresponding relationship.

When the current component is the current winding core, the first preset corresponding relationship can be pre-constructed to determine the corresponding relationship between the offset value between the real-time diameter of the current winding core and the preset target diameter and the pressure value of the embossing mechanism.

The first preset corresponding relationship can record the relationship between the offset value and the pressure value of the embossing mechanism in the form of a table, a curve, etc.

The pressure value of the embossing roller can be set according to a certain gradient, and the offset values between the diameter of the winding layer and the preset target diameter of the current winding layer corresponding to different pressure values can be obtained respectively. By fitting the obtained data sets, a mathematical model that describes the mathematical relationship between the offset value and the pressure value of the embossing mechanism is obtained, and the construction of the second preset corresponding relationship is completed. Usually, the offset is linearly related to the pressure value of the embossing mechanism.

In the embodiment of the present disclosure, a corresponding relationship between the average offset value of the current winding layer and the pressure value of the embossing mechanism is constructed by data fitting, so that the pressure value of the embossing mechanism can be adjusted conveniently and quickly, thereby improving the efficiency of the winding control of the cylindrical battery cell.

In one embodiment, at S308, adjusting the diameter of the next component by controlling the embossing mechanism to operate at a target pressure value, and driving the embossing roller of the embossing mechanism to emboss the cathode sheet or the anode sheet in the next component comprises adjusting the thickness of the next winding layer by controlling the embossing mechanism to operate at a target pressure value, and driving the embossing roller to emboss the cathode sheet or the anode sheet in the next winding layer.

After determining the target pressure value of the embossing mechanism according to the second preset corresponding relationship, the pressure value of the embossing mechanism is adjusted from the preset pressure value to the target pressure value, the cylinder operates at the target pressure value, and the cylinder drives the embossing roller to emboss the cathode sheet of the next winding layer, thereby adjusting the thickness of the cathode sheet. After the thickness of the cathode sheet changes, the thickness of the winding layer changes accordingly, thereby affecting the diameter of the winding core, achieving precise control of the diameter of the cylindrical battery cell, and effectively preventing the situation where the diameter of the battery cell does not meet the requirements.

It should be noted that, for the winding core and the winding layer, the process of matching the target pressure value of the embossing mechanism according to the preset corresponding relationship table, and the process of controlling the embossing mechanism to operate at the target pressure value are similar, and will not be repeated here.

FIG. 15 shows a line graph of the cylindrical winding core diameter versus target pressure value provided by an embodiment of the present disclosure. As shown in FIG. 15, the situation where the winding core diameter of the next winding core is adjusted according to the winding core diameter of the current winding core is shown. In FIG. 15, the horizontal axis is the number of winding cores, the left vertical axis is the air pressure value of the embossing roller, the right vertical axis is the winding core diameter, the dashed line is the curve of the air pressure values of the embossing roller versus different batches of winding cores, the solid line is the curve of the winding core diameter versus different batches of winding cores, and the dotted lines are the upper and lower limits of the winding core diameter, respectively. Based on the above control method for cylindrical battery cell winding, a mathematical model for diameter feedback is established and introduced into the winding machine. It can be seen that as the number of winding cores increases, the change trend of the air pressure value of the embossing roller and the change trend of the winding core diameter are consistent. When the winding core diameter of the current winding core is calculated, the diameter offset value can be determined according to the relationship between the winding core diameter and the upper and lower limits of the diameter, and then the air pressure value of the embossing roller is adjusted. Therefore, as the winding core diameter changes, the pressure value of the embossing roller changes accordingly, and the two are positively correlated. Under the closed loop action, the winding core diameter gradually returns to a range between the upper and lower limits of the winding core diameter and remains stable.

In the present disclosure, by real-time monitoring and automatic adjustment of the winding core diameter, the influence of the incoming material thickness on the winding core diameter is reduced, the consistency of the winding core diameter is improved, and it is beneficial to the assembly of the winding core into the shell and the welding of the collector plate. The embossed structure of the cathode sheet increases the distance between the anode sheet and the cathode sheet, and reserves a certain space for the full charge rebound of the anode sheet, thereby effectively reducing the stress between the anode sheet and the cathode sheet, improving the expansion of the battery cell. The embossed structure increases the exhaust channel inside the battery cell, thereby improving the thermal runaway problem. The concave and convex points on the surface of the electrode sheet increase the surface area of the electrode sheet, which is beneficial to the infiltration and absorption of the electrolyte, and the concave and convex points can play the role of storing the electrolyte, thereby improving the cycle performance of the battery cell.

Based on the same inventive concept, the present disclosure also provides a control device for cylindrical battery cell winding, such as the following embodiment. Since the principle of solving the problem in the device embodiment is similar to that in the above method embodiment, the implementation of the device embodiment can refer to the implementation of the above method embodiment, and the repeated parts will not be given.

FIG. 16 shows a schematic diagram of a structure of a control device for cylindrical battery cell winding in an embodiment of the present disclosure. As shown in FIG. 16, in one embodiment, the control device for cylindrical battery cell winding in an embodiment of the present disclosure comprises:

a diameter acquisition module 1610, configured to obtain a real-time diameter of a current component, the current component comprises a current winding core or a current winding layer;
an offset calculation module 1620, configured to calculate a real-time offset value according to the real-time diameter of the current component and a preset target diameter;
an air pressure matching module 1630, configured to determine a target pressure value of an embossing mechanism corresponding to the real-time offset value based on a preset corresponding relationship;
an embossing control module 1640, configured to adjust a diameter of a next component by controlling the embossing mechanism to operate at a target pressure value, driving an embossing roller of the embossing mechanism to emboss a cathode sheet or an anode sheet in the next component, where the next component comprises a winding core or a winding layer corresponding to the current component.

In one embodiment, when the current component is the current winding core, the diameter acquisition module 1610 is configured to obtain an initial pulse number of the outer separator encoding roller when winding the last turn of the separator of the current winding core and an end pulse number of the outer separator encoding roller when cutting off the separator; and calculate the real-time diameter of the current winding core according to the initial pulse number, the end pulse number, the diameter of the outer separator encoding roller and the pulse count accumulated for a rotating circle of the outer separator encoding roller.

In one embodiment, the diameter acquisition module 1610 is configured to obtain the separator thickness when the separator is cut off; and obtain a corrected real-time diameter by correcting the real-time diameter of the current winding core according to the separator thickness.

In one embodiment of the present disclosure, the diameter acquisition module 1610 is further configured to obtain a device factor compensation value; compensate the real-time diameter of the current winding core according to the device factor compensation value and obtain a compensated real-time diameter.

In one embodiment, the diameter acquisition module 1610 is configured to obtain the real-time diameter of the current component according to the distance sensor.

In one embodiment, when the current component is the current winding layer, the offset calculation module 1620 is configured to determine a preset target diameter of the current winding layer; and calculate an average offset value of the current winding layer according to the winding core diameter of the current winding layer, the preset target diameter of the current winding layer and the number of turns corresponding to the current winding layer.

In one embodiment, the offset calculation module 1620 is further configured to obtain the number of turns corresponding to the current winding layer; and determine the preset target diameter of the current winding layer according to the number of turns corresponding to the current winding layer, the preset target thickness of the winding layer and the preset initial thickness of the winding needle.

In the embodiment of the present disclosure, by obtaining the real-time diameter of the current component, the real-time offset value is calculated according to the real-time diameter of the current component and the preset target diameter, the target pressure value of the embossing mechanism corresponding to the real-time offset value is determined based on the preset corresponding relationship, the embossing mechanism is controlled to operate at the target pressure value, and the embossing roller of the embossing mechanism is driven to emboss the cathode sheet or the anode sheet in the next component to adjust the diameter of the next component. On the one hand, by adjusting the pressure value acting on the cathode sheet, the embossing depth of the cathode sheet is adjusted, and the thickness of the cathode sheet also changes accordingly, thereby playing a role in adjusting the diameter of the winding core. On the other hand, the embossing structure of the cathode sheet can also increase the distance between the cathode sheet and the anode sheet, reserve space for the full charge rebound of the anode sheet, reduce the stress between the anode sheet and the cathode sheet, improve the expansion of the battery cell, increase the exhaust channel inside the battery cell, and reduce the risk of thermal runaway of the battery cell.

Those skilled in the art can understand that various aspects of the present disclosure can be implemented as a system, method or program product. Therefore, various aspects of the present disclosure may be specifically implemented in the following forms, namely a complete hardware implementation, a complete software implementation (comprising firmware, microcode, etc.), or an implementation combining hardware and software, which may be collectively referred to as "circuit", "module" or "system".

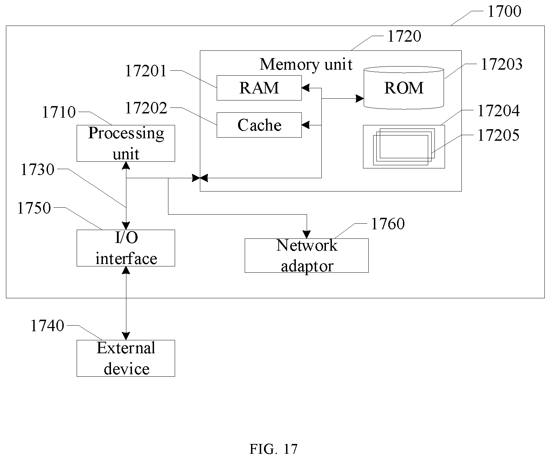

The electronic device 1700 according to this implementation of the present disclosure is described below with reference to FIG. 17. The electronic device 1700 shown in FIG. 17 is only an example and should not impose any limitations on the functions and scope of use of the embodiments of the present disclosure.

As shown in FIG. 17, the electronic device 1700 is presented in the form of a general computing device. The components of the electronic device 1700 may comprise, but are not limited to, the at least one processing unit 1710 mentioned above, the at least one memory unit 1720 mentioned above, and a bus 1730 connecting different system components (comprising the memory unit 1720 and the processing unit 1710).

The memory unit stores program code, and the program code can be executed by the processing unit 1710, so that the processing unit 1710 performs the steps according to various example implementations of the present disclosure described in the above "Example Method" section of this specification.

For example, the processing unit 1710 may perform the following steps of the method embodiment as shown in FIG. 3: obtaining the real-time diameter of the current component, the current component comprising the current winding core or the current winding layer; calculating the real-time offset value according to the real-time diameter of the current component and the preset target diameter; determining the target pressure value of the embossing mechanism corresponding to the real-time offset value based on the preset corresponding relationship; controlling the embossing mechanism to operate at the target pressure value, driving the embossing roller of the embossing mechanism to emboss the cathode sheet or the anode sheet in the next component to adjust the diameter of the next component, where the next component comprises the next winding core or the next winding layer corresponding to the current component.

The memory unit 1720 may comprise a readable medium in the form of a volatile memory unit, such as a random-access memory unit (RAM) 17201 and/or a cache memory unit 17202, and may further comprise a read-only memory unit (ROM) 17203.

The memory unit 1720 may also comprise a program/utility 17204 having a set (at least one) of program modules 17205, such program modules 17205 comprising, but not limited to, an operating system, one or more application programs, other program modules, and program data, each of which or some combination may comprise an implementation of a network environment.

The bus 1730 may represent one or more of several types of bus structures, comprising a memory unit bus or memory unit controller, a peripheral bus, a graphics acceleration port, a processing unit, or a local bus using any of a variety of bus structures.

The electronic device 1700 may also communicate with one or more external devices 1740 (e.g., a keyboard, a pointing device, a Bluetooth device, etc.), one or more devices that enable a user to interact with the electronic device 1700, and/or any device that enables the electronic device 1700 to communicate with one or more other computing devices (e.g., a router, a modem, etc.). Such communication may be performed via an input/output (I/O) interface 1750. Furthermore, the electronic device 1700 can also communicate with one or more networks (e.g., a local area network (LAN), a wide area network (WAN) and/or a public network, such as the Internet) through a network adapter 1760. As shown in FIG. 17, the network adapter 1760 communicates with other modules of the electronic device 1700 through the bus 1730. It should be understood that, although not shown in the figure, other hardware and/or software modules can be used in conjunction with the electronic device 1700, comprising but not limited to: microcode, device drivers, redundant processing units, external disk drive arrays, RAID systems, tape drives, and data backup storage systems.

Through the description of the above embodiments, it is easy for those skilled in the art to understand that the example embodiments described here can be implemented by software or by combining software with necessary hardware.

In an example embodiment of the present disclosure, a computer-readable storage medium is also provided, which can be a readable signal medium or a readable storage medium. In an example embodiment of the present disclosure, a computer program product is also provided. The computer program product comprises a computer program or a computer instruction. The computer program or computer instruction is loaded and executed by a processor to enable the computer to implement the steps of the method disclosed in the above embodiment.

More specific examples of computer-readable storage media in the present disclosure may comprise, but are not limited to: an electrical connection with one or more conductors, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above.

In the present disclosure, a computer-readable storage medium may comprise a data signal propagated in baseband or as part of a carrier wave, in which a readable program code is carried. Such propagated data signals may take a variety of forms, comprising but not limited to electromagnetic signals, optical signals, or any suitable combination of the above. The readable signal medium may also be any readable medium other than a readable storage medium, which can send, propagate or transmit a program for use by or in conjunction with an instruction execution system, device or element.

In some embodiments, the program code contained on the computer-readable storage medium may be transmitted using any appropriate medium, comprising but not limited to wireless, wired, optical cable, RF, etc., or any suitable combination of the above.

In specific implementation, the program code for performing the operation of the present disclosure may be written in any combination of one or more programming languages, comprising object-oriented programming languages such as Java, C++, etc., and conventional procedural programming languages such as "C" language or similar programming languages. The program code may be executed entirely on the user computing device, partially on the user device, as an independent software package, partially on the user computing device and partially on a remote computing device, or entirely on a remote computing device or server. In the case of a remote computing device, the remote computing device may be connected to the user computing device through any type of network, comprising a local area network (LAN) or a wide area network (WAN), or may be connected to an external computing device (e.g., using an Internet service provider to connect through the Internet).

It should be noted that although several modules or units of the device for action execution are mentioned in the above detailed description, such division is not mandatory. In fact, according to the embodiment of the present disclosure, the features and functions of two or more modules or units described above can be concretized in one module or unit. Conversely, the feature and function of one module or unit described above can be further divided into multiple modules or units for concretization.

In the application embodiment, the terms "first", "second", and "third" are used only for descriptive purposes and cannot be understood as indicating or implying relative importance; the term "multiple" refers to two or more, unless otherwise clearly defined. Terms such as "installation", "coupling", "connection", and "fixed" should be understood in a broad sense. For example, "connection" can be a fixed connection, a detachable connection, or an integral connection; "connection" can be a direct connection or an indirect connection through an intermediate medium. For those skilled in the art, the specific meanings of the above terms in the application embodiment can be understood according to the specific circumstances.

In the description of the application embodiment, it should be understood that the directions or positional relationships indicated by the terms "upper", "lower", "left", "right", "front", "back", etc. are based on the directions or positional relationships shown in the drawings, and are only for the convenience of describing the application embodiment and simplifying the description, rather than indicating or implying that the device or unit referred to must have a specific direction, be constructed and operated in a specific direction, and therefore, cannot be understood as a limitation on the application embodiment.

In the description of this specification, the description of the terms "one embodiment", "some embodiments", "specific embodiments", etc. means that the specific features, structures, materials or characteristics described in conjunction with the embodiment or example are comprised in at least one embodiment or example of the application embodiment. In this specification, the schematic representation of the above terms does not necessarily refer to the same embodiment or example. Moreover, the specific features, structures, materials or characteristics described can be combined in any one or more embodiments or examples in a suitable manner.

The above are only example embodiments of the present disclosure, and are not intended to limit the present disclosure. For those skilled in the art, the present disclosure may have various changes and variations. Any modifications, equivalent substitutions, improvements, etc. made within the spirit and principles of the present disclosure should be comprised in the protection scope of the present disclosure.

**Claims**

1. A control method for cylindrical battery core winding, comprising:

(S302) obtaining a real-time diameter of a current component, wherein the current component comprises a current winding core or a current winding layer;
(S304) calculating a real-time offset value according to the real-time diameter of the current component and a preset target diameter;
(S306) determining a target pressure value of an embossing mechanism corresponding to the real-time offset value based on a preset corresponding relationship; and
(S308) adjusting a diameter of a next component by controlling the embossing mechanism to operate at the target pressure value and driving an embossing roller of the embossing mechanism to emboss a cathode sheet or an anode sheet in the next component, wherein the next component comprises a next winding core or a next winding layer corresponding to the current component.

2. The method according to claim 1, wherein the current component is the current winding core, and the (S302) obtaining the real-time diameter of the current component comprises:

(S702) obtaining an initial pulse number of an outer separator encoding roller when winding a last turn of a separator of the current winding core and an end pulse number of the outer separator encoding roller when cutting off the separator; and
(S704) calculating the real-time diameter of the current winding core according to the initial pulse number, the end pulse number, a diameter of the outer separator encoding roller and a pulse count accumulated for a rotating circle of the outer separator encoding roller.

3. The method according to claim 2, further comprising:

(S706) obtaining a separator thickness when cutting off the separator; and
(S708) obtaining a corrected real-time diameter by correcting the real-time diameter of the current winding core according to the separator thickness.

4. The method according to claim 2 or 3, further comprising:

(S710) obtaining a device factor compensation value; and
(S712) obtaining a compensated real-time diameter by compensating the real-time diameter of the current winding core according to the device factor compensation value.

5. The method according to claim 1, wherein obtaining the real-time diameter of the current component comprises: obtaining the real-time diameter of the current component according to a distance sensor.

6. The method according to claim 1, wherein the current component is the current winding layer, and calculating the real-time offset value based on the real-time diameter of the current component and the preset target diameter comprises:

(S1102) determining the preset target diameter of the current winding layer; and
(S1104) calculating an average offset value of the current winding layer based on a winding core diameter of the current winding layer, the preset target diameter of the current winding layer and a number of turns corresponding to the current winding layer.

7. The method according to claim 6, wherein determining the preset target diameter of the current winding layer comprises:

(S1302) obtaining the number of turns corresponding to the current winding layer; and
(S1304) determining the preset target diameter of the current winding layer based on the number of turns corresponding to the current winding layer, a preset winding layer target thickness and a preset winding needle initial thickness.

8. An electronic device, comprising:

 a processor (1710); and
 a memory (1720), configured to store an executable instruction of the processor (1710);
 wherein the processor (1710) is configured to execute a control method for cylindrical battery cell winding according to any one of claims 1 to 7 by executing the executable instruction.

9. A computer-readable storage medium having a computer program stored thereon, wherein when the computer program is executed by a processor, a control method for cylindrical battery cell winding according to any one of claims 1 to 7 is implemented.

FIG. 1

FIG. 2

Obtaining a real-time diameter of a current component, where the current component includes a current winding core or a current winding layer — S302

Calculating a real-time offset value according to the real-time diameter of the current component and a preset target diameter — S304

Determining a target pressure value of an embossing mechanism corresponding to the real-time offset value based on a preset corresponding relationship — S306

Adjusting a diameter of a next component by controlling the embossing mechanism to operate at the target pressure value, and driving an embossing roller of the embossing mechanism to emboss a cathode sheet or an anode sheet in the next component, where the next component includes a next winding core or a next winding layer corresponding to the current component — S308

FIG. 3

FIG. 4

FIG. 5

FIG. 6

610

620

630

S702

Obtaining an initial pulse number of an outer separator encoding roller when winding a last turn of a separator of the current winding core and an end pulse number of the outer separator encoding roller when cutting off the separator

S704

Calculating the real-time diameter of the current winding core according to the initial pulse number, the end pulse number, a diameter of the outer separator encoding roller and a pulse count accumulated during the outer separator encoding roller rotating one circle

FIG. 7

610

820

810

D

FIG. 8

S702

Obtaining an initial pulse number of an outer separator encoding roller when winding a last turn of a separator of the current winding core and an end pulse number of the outer separator encoding roller when cutting off the separator

S704

Calculating the real-time diameter of the current winding core according to the initial pulse number, the end pulse number, a diameter of the outer separator encoding roller and a pulse count accumulated during the outer separator encoding roller rotating one circle

S706

Obtaining a thickness of the separator when cutting off the separator

S708

Obtaining a corrected real-time diameter by correcting the real-time diameter of the current winding core according to the thickness of the separator

FIG. 9

S702

Obtaining an initial pulse number of an outer separator encoding roller when winding a last turn of a separator of the current winding core and an end pulse number of the outer separator encoding roller when cutting off the separator

S704

Calculating the real-time diameter of the current winding core according to the initial pulse number, the end pulse number, a diameter of the outer separator encoding roller and a pulse count accumulated during the outer separator encoding roller rotating one circle

S710

Obtaining a device factor compensation value

S712

Compensating the real-time diameter of the current winding core according to the device factor compensation value and obtaining a compensated real-time diameter

FIG. 10

S1102

Determining the preset target diameter of the current winding layer

S1104

Calculating an average offset value of the current winding layer according to a winding core diameter of the current winding layer, the preset target diameter of the current winding layer and a number of turns corresponding to the current winding layer

FIG. 11

Distance sensor

Dn'

d'

610

620

630

FIG. 12

S1302

Obtaining the number of turns corresponding to the current winding layer

S1304

Determining the preset target diameter of the current winding layer according to the number of turns corresponding to the current winding layer, a preset winding layer target thickness and a preset winding needle initial thickness

FIG. 13

FIG. 14

FIG. 15

FIG. 16

FIG. 17

Europäisches
Patentamt

European
Patent Office

Office européen
des brevets

# EUROPEAN SEARCH REPORT

**Application Number**

EP 24 22 2246

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 214 378 574 U (SHENZHEN GEESUN INTELLIGENT TECH CO LTD) 8 October 2021 (2021-10-08) * the whole document * | 1-9 | INV. H01M10/04 H01M10/0587 |
| A | CN 115 732 632 A (HEFEI NENGCHU TECH CO LTD) 3 March 2023 (2023-03-03) * the whole document * | 1-9 | |
| A | CN 115 882 166 A (GUANGDONG LYRIC ROBOT INTELLIGENT AUTOMATION CO LTD) 31 March 2023 (2023-03-31) * the whole document * | 1-9 | |

**TECHNICAL FIELDS SEARCHED (IPC)**

H01M

The present search report has been drawn up for all claims

| Place of search | Date of completion of the search | Examiner |
|---|---|---|
| Munich | 26 May 2025 | Swiatek, Ryszard |

EPO FORM 1503 03.82 (P04C01)

**EP 4 589 702 A1**

## ANNEX TO THE EUROPEAN SEARCH REPORT
## ON EUROPEAN PATENT APPLICATION NO.

EP 24 22 2246

This annex lists the patent family members relating to the patent documents cited in the above-mentioned European search report.
The members are as contained in the European Patent Office EDP file on
The European Patent Office is in no way liable for these particulars which are merely given for the purpose of information.

26-05-2025

| Patent document cited in search report | | Publication date | Patent family member(s) | Publication date |
|---|---|---|---|---|
| CN 214378574 | U | 08-10-2021 | NONE | |
| CN 115732632 | A | 03-03-2023 | NONE | |
| CN 115882166 | A | 31-03-2023 | NONE | |

EPO FORM P0459

For more details about this annex : see Official Journal of the European Patent Office, No. 12/82